# EUROPEAN PATENT APPLICATION

(11) **EP 4 216 334 A1**
(43) Date of publication of application: **26.07.2023**
(21) Application number: 22152407.7
(22) Date of filing: 20.01.2022
(51) Int. Cl.: H01M 10/42, H01M 10/48, G01R 31/364, H01M 50/569, H01M 6/50

(54) **BATTERY CELL, BATTERY MODULE, BATTERY PACK, BATTERY MANAGEMENT SYSTEM AND METHOD FOR DETERMINING A VALUE OF AT LEAST ONE WEAR PARAMETER OF A BATTERY CELL**

(71) Applicant: ABB SCHWEIZ AG, 5400 Baden (CH)
(72) Inventor: HE, Minglong, 5400 Baden (CH); SCHULER, Gabriel, 6415 Arth (CH); CHARTOUNI, Daniel, 5430 Wettingen (CH); KRAMER, Axel, 8057 Zürich (CH)
(74) Representative: Qip Patentanwälte Dr. Kuehn & Partner mbB

(57) **Abstract**

A battery cell (20) is provided. The battery cell (20) comprises a cell body (21); at least two electrical contacts (30, 32); and at least one wear sensor (42) being arranged within and/or at the cell body (21) such that it is visible from outside of the cell body (21) and being configured for determining at least one wear parameter and for changing its visual appearance depending on the measured wear parameter.

## Description

### FIELD OF THE INVENTION

The invention relates to the field of battery cells, battery modules and battery packs. In particular, the invention relates to a battery cell, a battery module comprising the battery cell, a battery pack comprising the battery module, a battery management system for checking a wear state of one or more of the battery cells and a method for determining a value of at least one wear parameter of one of the battery cells.

### BACKGROUND OF THE INVENTION

An increasing number of vehicles, e.g. cars, trains, subways, busses, is equipped with high-performance battery cells. A typical high-performance battery cell may have a nominal capacity between 1 Ah and 1000 Ah and may be used for driving the corresponding vehicle, in particular for providing a power train of the corresponding vehicle with energy.

Conventional high-performance battery cells may be fully assembled and encapsulated in modules. Then, the modules may be combined and encapsulated as battery packages. These battery packages may be arranged in the vehicles. In the most cases, the battery packages are not designed to be removed easily, e.g. in order to check and/or substitute one or more of the battery cells. In contrast, it is common practice that intense efforts have to be taken to check a wear status of the battery cells within the battery modules within the battery packages.

The battery cells, in particular the high-performance battery cells, comprise e.g. lithium-ion cells and sodium-ion cells. The Li-ion cells may fail in non-energetic and energetic modes. Non-energetic cell failures, which show no thermal runway but cause the permanent or irreversible damage to the cell, may mainly affect the reliability of the battery. Non-energetic failures may include capacity fading, internal resistance increase, cell swelling, electrolyte leakage and the consequent cell dry-out. Sometimes, in a later stage in time, non-energetic failures may be associated with not only the cell ageing process but also the root cause of later energetic failures. Energetic cell failures may be associated with a self-sustaining exothermic reaction within the cell, e.g. leading to thermal runaway.

Abnormal or abused, in other words worn out battery cells may lead to a failure of the whole battery module and/or battery pack. For safety concerns, it may be crucial to detect those non-energetic battery cell failures before the energetic failures occur.

Second-life application and recycling may be two approaches to improve a battery sustainability. Today, it is a challenge to separate worn out batteries from batteries with good conditions, normally requiring a sophisticated electrical test. This may result in high costs and/or safety risks of the second-life applications. Thus, the problem of low-efficient and high-cost battery sorting may have to be addressed.

CN 103 545 567 A describes to sort out battery cells based on a capacity and an internal resistance of the corresponding battery cells. However, an electrical test may be required for each battery cell to test.

JPH 10 172 618 A describes the sorting based on electrolyte leakage, wherein each cell may be stored in a sealed container to detect the cell leakage with an odor sensor. However, then the cell may have to be disassembled from the battery module and have to be stored in the leakage detection container. This may not be very time efficient. Further, dry-out cells may not be detected since all of the electrolyte within the battery cell may have been evaporated.

An alternative approach may be the sorting based on an electrochemical impedance spectroscopy (EIS) and its equivalent model parameters, and/or based on a charge and discharge voltage curve of the corresponding battery cells. The disadvantage with these approaches may be that an electrical test may be required for each battery cell to test.

KR 2014 032 917 A and US 2006 00 08 699 A1 suggest a detection of overheated cells with a thermochromic indicator. However, the overheating information alone may not be sufficient to finally judge the battery condition. For example, a cell could be exposed to the high temperature, e.g. more than 50°C, in a very short period, which may cause no ageing reactions. In order to verify whether there is a severe problem the battery pack and module may have to be disassembled to check the overheating information, which may be destructive to the module and pack.

### DESCRIPTION OF THE INVENTION

Therefore, it is an objective of the present invention to provide a battery cell which may enable checking a wear state of the battery cell, in other words wear conditions of the battery cell, and/or battery sorting to improve battery safety and reliability. In particular, an economic and comprehensive solution may be provided to examine and sort out worn-out abnormal battery cells during the operation, during the rest time, or after the service life. Different inspection approaches are disclosed to evaluate the battery conditions without opening the battery module and pack. Workflows for fast battery sorting are concluded. Such a solution could be served as a fast and easy diagnostic tool for BESS (battery energy storage system) service engineers.

Further, it is an objective of the present invention to provide a battery module which may enable checking a wear state of battery cells of the battery module, in other words wear conditions of the battery cells, and/or which may enable the battery sorting of the battery cells to improve battery module safety and reliability in an easy and cost-efficient way.

Further, it is an objective of the present invention to provide a battery pack which may enable checking a wear state of battery cells of battery modules of the battery pack, in other words wear conditions of the battery cells, and/or which may enable the battery sorting of the battery cells to improve battery pack safety and reliability in an easy and cost-efficient way.

Furthermore, it is an objective of the present invention to provide a Battery Management System (BMS) for checking a wear state of one or more battery cells in a simple and cost-efficient way.

Furthermore, it is an objective of the present invention to provide a method for determining a value of at least one wear parameter of one of the battery cells, one of the battery modules and/or the battery pack in a simple and cost-efficient way.

These objectives are achieved by the subject-matter of the independent claims. Further exemplary embodiments are evident from the dependent claims and the following description.

In particular, an objective of the present invention is achieved by a battery cell, comprising a cell body, at least two electrical contacts, and at least one wear sensor being arranged within and/or at the cell body such that it is visible from outside of the cell body and being configured for determining at least one wear parameter and for changing its visual appearance depending on the measured wear parameter.

The battery cell enables a visual diagnostic method to indicate a battery condition, in particular a wear state, e.g. a State Of Health (SOH), of the battery cell. In addition, BESS (Battery Energy Storage System) service engineers may easily inspect and evaluate the battery conditions from outside of the battery cell. Therefore the battery cell enables checking the wear state of the battery cell, in other words wear conditions of the battery cell, and/or battery sorting to improve battery safety and reliability, in an easy and cost-efficient way.

The battery cell may be a high-performance battery cell having a nominal capacity between 1 Ah and 1000 Ah. The nominal capacity may be between 20 Ah and 500 Ah, e.g. between 25 Ah and 100 Ah. The electrical contacts may be arranged at opposing sides of the cell body. The electrical contacts may correspond to the poles of the battery cell. For example, one of the electrical contacts may correspond to the plus-pole and the other one of the electrical contacts may correspond to the minus-pole of the battery cell. The cell body may have a prismatic shape. For example, the cell body may have a cuboid shape.

According to an embodiment, the battery cell comprises a transparent cell window within the cell body, wherein the wear sensor is arranged within the cell body behind the cell window such that the wear sensor is visible from outside of the cell body through the cell window. The cell window may be a simple recess within the cell body. For example, the cell window may be a hollow or hole structure allowing an internal sensor status visibility from outside of the battery cell. For example, the position of the wear sensor may replace a position of a vent disc of the battery cell. Alternatively, the cell window may be made of a transparent material, e.g. a rigid or flexible material, to allow the internal sensor status visibility from outside of the battery cell. The wear sensor may be arranged at any place inside the cell body.

Alternatively, the wear sensor may be arranged at an outer surface of the cell body such that it is visible without the need for any cell window. For example, the wear sensor may be arranged at a bottom or centre of cell body, or close to the vent disc, etc.

According to an embodiment, the at least one wear parameter is one of a group of wear parameters, the group comprising hydrogen fluoride (HF) content, pH-value, ethylene carbonate content, diethyl carbonate content, current within the battery cell, H₂O content, H₂ content, cell deformation, CO content, C₂H₄ content, and CO₂ content. The HF content and/or the pH-value may be determined to detect an electrolyte salt leakage, e.g. a lithium salt leakage, e.g. a LiPF₆ salt leakage. The ethylene carbonate content and/or the diethyl carbonate content may be determined to detect organic solvent leakages. The current within the battery cell may be determined to detect an overcharging and/or a short circuit, e.g. by a colorimetric voltmeter. The H₂O content and/or H₂ content may be determined to detect the humidity and/or an immersion history within the battery cell. The cell deformation may be determined to detect an overpressure within the cell body. The CO content may be determined to detect toxic and/or flammable gases from the battery cell. The C₂H₄ and/or the H₂ content may be determined to detect ageing gases from the battery cell.

According to an embodiment, the wear sensor comprises at least one of the group of a tape, a coating, a painting, an integrated chip.

According to an embodiment, the wear sensor is configured for changing its visual appearance depending on the measured wear parameter by changing at least one of the group of its colour, its shape, its transparency, the amount of its material. The amount of the material may change if a part of the wear sensor disappears, e.g. by complete or partly vaporization or melting of the material of the wear sensor.

According to an embodiment, the battery cell comprises a sensor array comprising the wear sensor and at least one further wear sensor being arranged within and/or at the cell body such that it is visible from outside of the cell body and being configured for determining at least one further wear parameter and for changing its visual appearance depending on the measured further wear parameter. The sensor array enables to detect and check more than one, e.g. two or more different wear parameters at a time in an easy and cost-efficient way.

An objective of the present invention is achieved by a battery module, comprising at least two of the above battery cells and a module housing in which the battery cells are arranged and which comprises a transparent module window which is arranged such that the wear sensor is visible from outside of the battery module through the module window. The module window may be a simple recess within the module housing. For example, the module window may be a hollow or hole structure allowing an internal wear sensor status visibility from outside of the module. Alternatively, the module window may be made of a transparent material, e.g. a rigid or flexible material, to allow the internal sensor status visibility from outside of the module.

The above features, advantages and/or effects of the battery cell may be transferred to the above battery module. Therefore, a repetition of these features, advantages and/or effects is omitted and it is referred to the above explanations only in order to provide a concise description.

An objective of the present invention is achieved by a battery module comprising: at least two battery cells having a cell body and at least two electrical contacts; a first guide unit coupled to the battery cells and being configured for guiding at least one wear indicator from the battery cells to a wear sensor; and the wear sensor being arranged within and/or at the battery module such that it is visible from outside of the battery module and being configured for determining at least one wear parameter from the wear indicator and for changing its visual appearance depending on the measured wear parameter. The first guide unit may be referred to as first sensing guide channel. The first guide unit may be applied to direct signal sources, i.e. wear indicators, to a sensing area provided by the wear sensor within or outside of the battery module.

The above features, advantages and/or effects of the battery cell may be transferred to the above battery module. Therefore, a repetition of these features, advantages and/or effects is omitted and it is referred to the above explanations only in order to provide a concise description.

According to an embodiment, the battery module comprises a module housing in which the battery cells, the first guide unit and the wear sensor are arranged, the module housing comprising a transparent module window which is arranged such that the wear sensor is visible from outside of the battery module through the module window. The module window may be a simple recess within the module housing. For example, the module window may be a hollow or hole structure allowing an internal wear sensor status visibility from outside of the module. Alternatively, the module window may be made of a transparent material, e.g. a rigid or flexible material, to allow the internal sensor status visibility from outside of the module.

Alternatively, according to another embodiment, the battery module comprises a module housing in which the battery cells and the guide unit are arranged, wherein the wear sensor is arranged at an outer surface of the module housing and wherein the first guide unit is guided through the module housing to the wear sensor.

An objective of the present invention is achieved by a battery pack comprising at least two of the above battery modules and a pack housing, in which the battery modules are arranged and which comprises a transparent pack window which is arranged such that the wear sensor is visible from outside of the battery pack through the pack window, and if any through the corresponding module window.

The above features, advantages and/or effects of the battery cell and/or the battery module may be transferred to the battery pack. Therefore, a repetition of these features, advantages and/or effects is omitted and it is referred to the above explanations only in order to provide a concise description.

An objective of the present invention is achieved by a battery pack, comprising: at least two of the battery modules each comprising at least two of the battery cells each having a cell body and at least two electrical contacts and a first guide unit being arranged within the corresponding battery module. The first guide unit may be coupled to the corresponding battery cells and may be configured for guiding at least one wear indicator from the battery cells to a second guide unit. The second guide unit may be arranged within the battery pack but outside of the battery modules. The second guide unit may be coupled to the first guide unit and may be configured for guiding the at least one wear indicator from the first guide unit to the wear sensor. The wear sensor may be arranged within and/or at the battery pack such that it is visible from outside of the battery pack and may be configured for determining the at least one wear parameter from the wear indicator and for changing its visual appearance depending on the measured wear parameter.

The above features, advantages and/or effects of the battery cell and/or the battery module may be transferred to the battery pack. Therefore, a repetition of these features, advantages and/or effects is omitted and it is referred to the above explanations only in order to provide a concise description.

According to an embodiment, the battery pack comprises a transparent pack window within the battery pack, wherein the wear sensor is arranged within the battery pack behind the pack window such that the wear sensor is visible from outside of the battery pack through the pack window.

An objective of the present invention is achieved by a battery management system for checking a wear state of one or more battery cells. The battery management system comprises at least one optical sensor being configured for detecting the visual appearance of the wear sensor of one or more of the above battery cells, battery modules and/or battery packs. The optical sensor may be configured for generating a signal representing the visual appearance of the wear sensor. A controller of the BMS may be coupled to the optical sensor and may be configured to receive the signal from the optical sensor and for determining a value of the wear parameter depending on the visual appearance of the wear sensor.

The above features, advantages and/or effects of the battery cell, the battery module and/or the battery pack may be transferred to the battery arrangement system. Therefore, a repetition of these features, advantages and/or effects is omitted and it is referred to the above explanations only in order to provide a concise description.

An objective of the present invention is achieved by a method for determining the value of the one or more wear parameters of one or more of the above battery cells, battery modules and/or battery packs. The method comprises the steps of receiving a signal representing the visual appearance of the wear sensor of the battery cell, the battery module and/or the battery pack; and determining a value of the wear parameter depending on the visual appearance of the wear sensor. The method represents a visual diagnostic method to indicate the battery conditions, in particular by sensing of the wear state for battery safety, including leakage, swelling, cell deformation, and/or overcharging without changing inside parts of the cell.

The above features, advantages and/or effects of the battery cell, the battery module and/or the battery pack may be transferred to the method for determining a value of at least one wear parameter of one of the above battery cell, battery module and/or battery pack. Therefore, a repetition of these features, advantages and/or effects is omitted and it is referred to the above explanations only in order to provide a concise description.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows an exemplary embodiment of a battery cell and a sensor array;
Fig. 2 schematically shows an exemplary embodiment of a battery cell;
Fig. 3 schematically shows a detailed cross-sectional view of an exemplary embodiment of a cell window and a sensor array of the battery cell of figure 2;
Fig. 4 schematically shows a cross-sectional top view of an exemplary embodiment of a battery module;
Fig. 5 schematically shows a cross sectional side view of the battery module of figure 4;
Fig. 6 schematically shows a bottom view an exemplary embodiment of a battery module;
Fig. 7 schematically shows a cross sectional side view of the battery module of figure 6;
Fig. 8 schematically shows a cross sectional side view of an exemplary embodiment of a battery pack;
Fig. 9 schematically shows a cross sectional side view of an exemplary embodiment of a battery module;
Fig. 10 schematically shows a cross sectional side view of an exemplary embodiment of a battery module;
Fig. 11 schematically shows a cross sectional side view of an exemplary embodiment of a battery pack;
Fig. 12 schematically shows a cross sectional side view of an exemplary embodiment of a battery pack;
Fig. 13 schematically illustrates a working principle of an exemplary embodiment of a battery management system;
Fig. 14 schematically illustrates a working principle of an exemplary embodiment of a battery management system;
Fig. 15 schematically shows a flow diagram of an exemplary embodiment of a method for determining a value of at least one wear parameter of a battery cell, a battery module and/or a battery pack.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

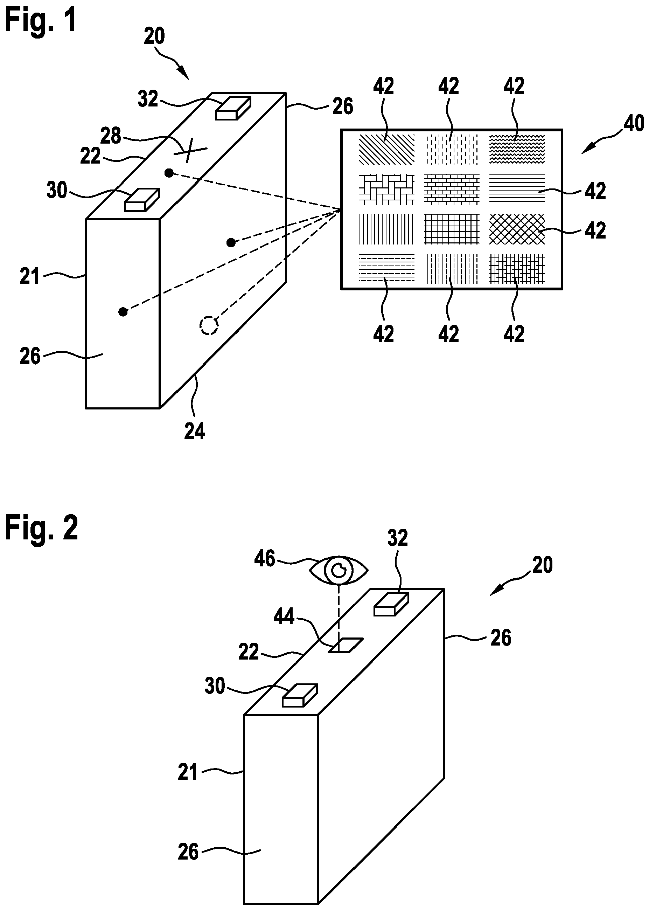

Fig. 1 schematically shows an exemplary embodiment of a battery cell 20, e.g. a high-performance battery cell 20 and a sensor array 40. For example, the battery cell 20 may be used for driving a car, a train, a subway, a bus, etc.

The high-performance battery cell 20 may have a nominal capacity between 15 Ah and 1.000 Ah. The nominal capacity may be between 20 Ah and 500 Ah, e.g. between 25 Ah and 100 Ah. The battery cell 20 may comprise a cell body 21 and at least two electrical contacts, in particular a first electrical contact 30 and a second electrical contact 32. The electrical contacts 30, 32 may be arranged at opposing sides or at the same side of the cell body 21. The electrical contacts 30, 32 may correspond to the poles of the battery cell 20. For example, one of the electrical contacts 30, 32 may correspond to the plus-pole and the other one of the electrical contacts 30, 32 may correspond to the minus-pole of the battery cell 20.

The cell body 21 may comprise a first side 22, a second side 24 a third side 26. The first side 22 may be smaller than the second side 24, and the second side 24 may be smaller than the third side 26. Optionally, the cell body 21 may have a prismatic shape. For example, the cell body 21 may have a cuboid shape.

The high-performance battery cell 20 may comprise a vent 28. The vent 28 may be configured to release gas from inside of the battery cell 20, if a pressure of the gas exceeds a predetermined gas pressure threshold. For example, the vent 28 may comprise or may consist of a vent disc and/or bursting disc.

The sensor array 40 may comprise two or more wear sensors 42. For example, the sensor array 40 comprises 12 wear sensors 42. Alternatively, the sensor array 40 may comprise more or less wear sensors 42. Alternatively, the battery cell 20 may comprise one wear sensor 42 only. The sensor array 40, in particular the wear sensors 42, may be arranged within and/or at the cell body 21 such that it is visible from outside of the cell body 21.

If the sensor array 40 is arranged at an outer surface of the cell body 21, as shown in figure 1, the wear sensor 42 may be arranged at any position on the cell body 21, e.g. at a bottom of cell body 21, at the first side 22, e.g. close to the vent 28, at the second side 24, e.g. in the centre of the second side 24, or at the third side 26, e.g. in the centre of the third side 26. For example, the sensor array 40 may be arranged at the position of the vent 28, wherein the vent 28 may be omitted.

Each of the wear sensors 42 may be configured for determining at least one wear parameter and for changing its visual appearance depending on the measured wear parameter. So, the sensor array 42 enables to detect and check more than one, e.g. two or more different wear parameters at a time by visual inspection. The wear parameters may be one or more of a group of wear parameters, the group comprising HF content, pH-value, ethylene carbonate content, diethyl carbonate content, current within the battery cell, H₂O content, H₂ content, cell deformation, CO content, C₂H₄ content, and CO₂ content. The HF content and/or the pH-value may be determined to detect a electrolyte salt leakage, e.g. a lithium salt leakage, e.g. a LiPF₆ salt leakage. The ethylene carbonate content and/or the diethyl carbonate content may be determined to detect organic solvent leakages. The current within the battery cell 20 may be determined to detect an overcharging and/or a short circuit, e.g. by a colorimetric voltmeter. The H₂O content and/or H₂ content may be determined to detect the humidity and/or an immersion history within the battery cell 20. The cell deformation may be determined to detect an overpressure within the cell body 21. The CO content may be determined to detect toxic and/or flammable gases from the battery cell 20. The C₂H₄ and/or the H₂ content may be determined to detect ageing gases from the battery cell 20.

Each of the wear sensors 42 may comprise or may be made of at least one of the group of a tape, e.g. a sensing tape and/or an adhesive tape, a coating, a painting, and an integrated chip. The sensor array 40, in particular the wear sensors 42 may be attached to the cell body 20 after a battery cell assembly of the battery cell 20 and/or during a battery module and/or battery pack assembly.

The wear sensors 42 are configured for changing their visual appearance depending on the measured wear parameter by changing at least one of the group of its colour, its shape, its transparency, the amount of its material. The amount of the material may change if a part of the wear sensor 42 disappears, e.g. by complete or partly vaporization or melting of the material of the wear sensor 42.

Fig. 2 schematically shows an exemplary embodiment of a battery cell 20. The battery cell 20 may widely correspond to the above the battery cell 20. Therefore, only those features of the battery cell 20 are explained in the following in which the battery cell of figure 2 differs from the above battery cell 20.

The sensor array 40 may be arranged within the cell body 21. In this case, the battery cell 20 may comprise a transparent cell window 44 within the cell body 21. The sensor array 40, in particular the wear sensors 42, may be arranged within the cell body 21 behind the cell window 44 such that the wear sensor 42 may be visible from outside of the cell body 21 through the cell window 44. The cell window 44 may overlap, e.g. completely, the sensor array 40, in particular the wear sensors 42. The cell window 44 may be a simple recess within the cell body 21. For example, the cell window 44 may be a hollow or hole structure allowing an internal sensor status visibility from outside of the battery cell 20. Alternatively, the cell window 44 may be made of a transparent material, e.g. a rigid or flexible material, to allow the internal sensor status visibility from outside of the battery cell 20.

A status of the battery cell 20 may be checked by a user or service personal by visually checking the appearance of the sensor array 42, e.g. by an eye 46 of the user or of the service personal. Alternatively, the status of the battery cell 20 may be checked automatically by a battery management system, as explained below.

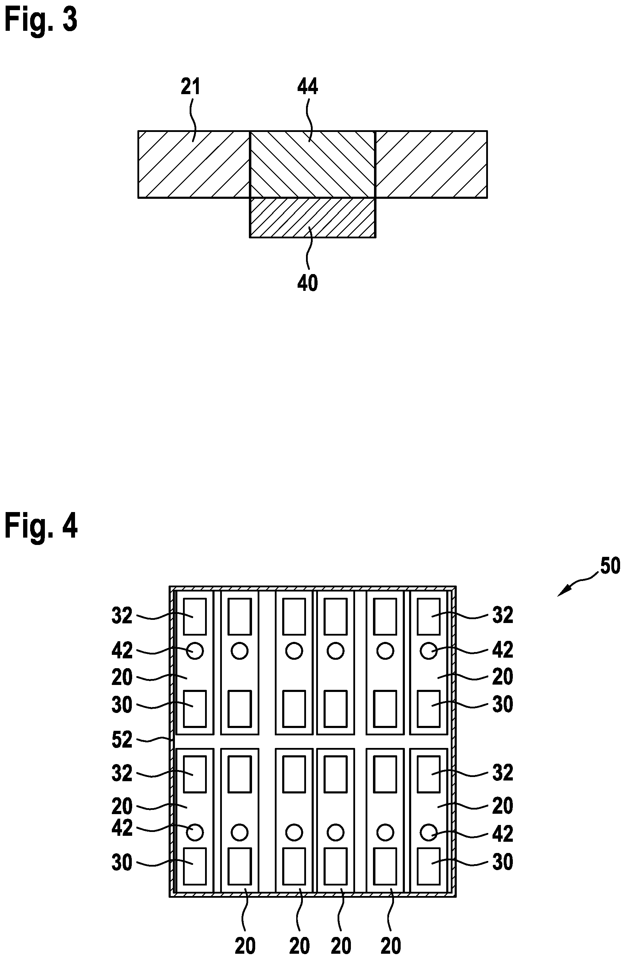

Fig. 3 schematically shows a detailed cross-sectional side view of an exemplary embodiment of a cell window 44 and a sensor array 40 of the battery cell 20 of figure 2. From figure 3 it may be seen that the sensor array 40 may be arranged directly behind the cell window 44. Instead of the sensor array 40, the battery cell 20 may comprise one single wear sensor 42.

Fig. 4 schematically shows a cross-sectional top view of an exemplary embodiment of a battery module 50. The battery module 50 may comprise at least two, e.g. 12, of the above battery cells 20 and a module housing 52 in which the battery cells 20 are arranged. Each of the battery cells 20 may comprise at least one wear sensor 42. For example, each of the battery cells 20 may comprise one sensor array 40, with each sensor array 40 comprising at least two of the wear sensors 42.

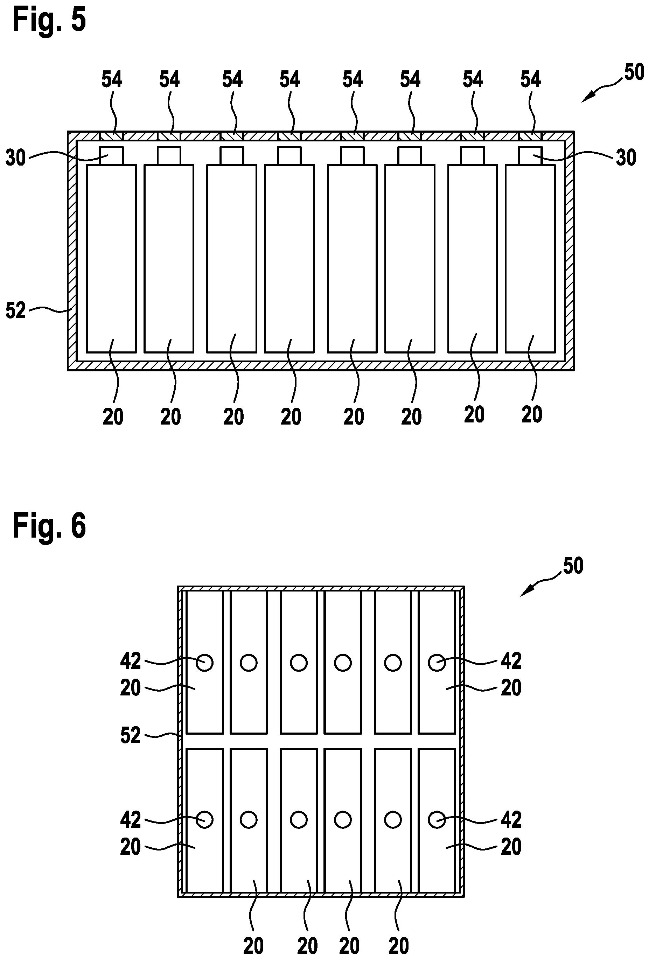

Fig. 5 schematically shows a cross sectional side view of the battery module 50 of figure 4. The module housing 52 may comprise a transparent module window 54 for each of the battery cells 20 within the battery module 50. The transparent module windows 54 may be arranged such that the corresponding wear sensors 42 are visible from outside of the battery module 50 through the corresponding module window 54. For example, the module windows 54 are arranged such that they overlap, e.g. completely, the corresponding sensor array 40 and/or wear sensors 42.

The module windows 54 each may be a simple recess within the module housing 52. For example, the module windows 54 may be hollow or hole structures allowing an internal wear sensor status visibility from outside of the battery module 50. Alternatively, the module windows 54 each may be made of a transparent material, e.g. a rigid or flexible material, to allow the internal sensor status visibility from outside of the battery module 50.

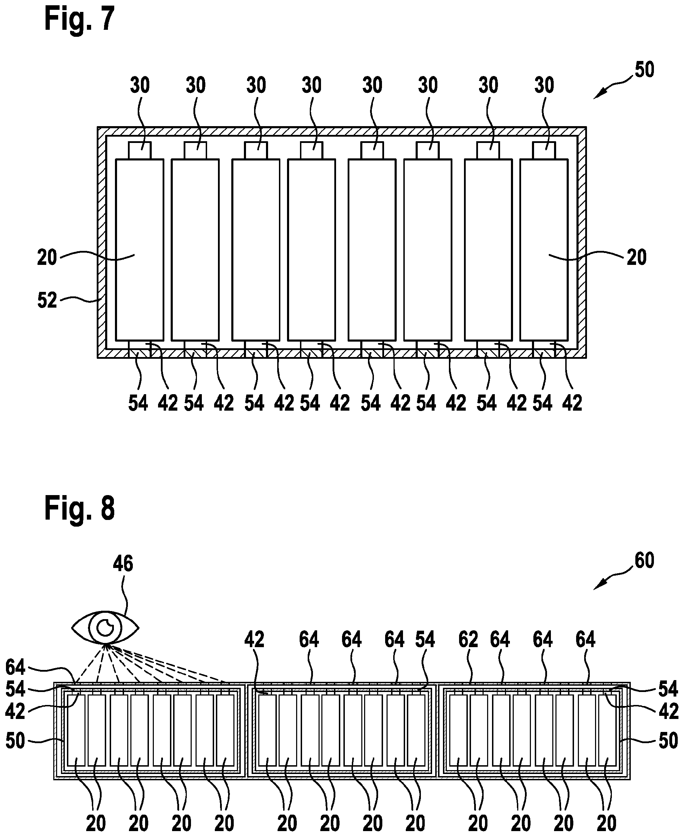

Fig. 6 schematically shows a cross-sectional bottom view of an exemplary embodiment of a battery module and Fig. 7 schematically shows a cross sectional side view of the battery module of figure 6. The battery module 50 may widely correspond to the above the battery module 50. Therefore, only those features of the battery module 50 are explained in the following in which the battery module 50 of figures 6 and 7 differs from the above battery module 50.

The wear sensors 42, or alternatively the sensor arrays 40, may be arranged at the bottom of the corresponding battery cells 20. The module windows 54 may be correspondingly arranged at the bottom of the battery module 50.

Fig. 8 schematically shows a cross sectional side view of an exemplary embodiment of a battery pack 60. The battery pack 60 may comprise at least two of the above battery modules 50 and a pack housing 62 in which the battery modules 50 are arranged. The battery pack 60 may comprise a transparent pack window 64 for each of the module windows 54, in particular for each of the battery cells 20. The pack window 64 may be arranged such that the wear sensors 42 may be visible from outside of the battery pack 60 through the pack windows 64 and the module windows 54. For example, the pack windows 64 may be arranged such that they overlap, e.g. completely overlap, the corresponding module windows 54.

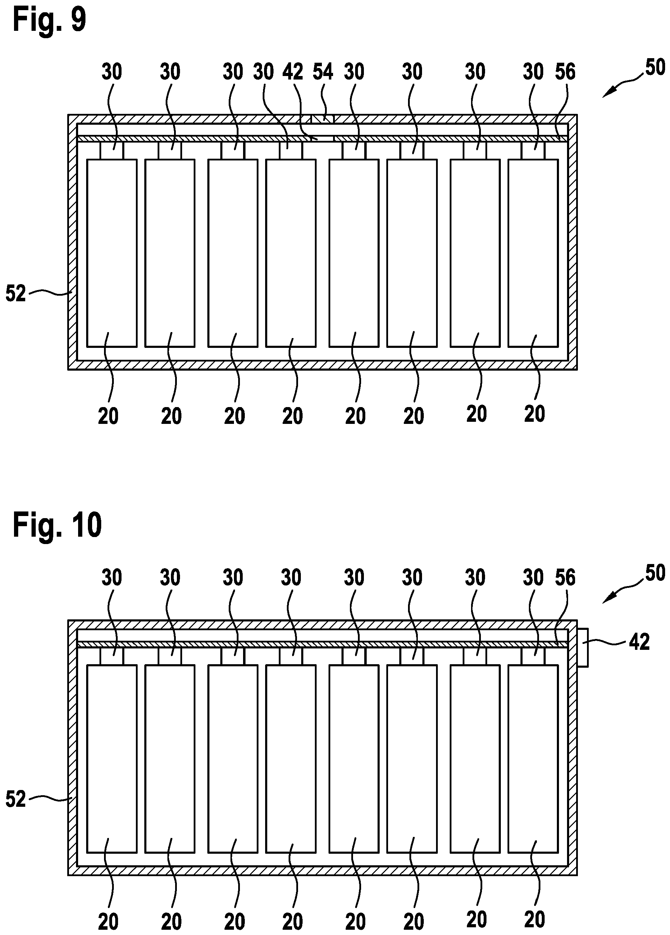

Fig. 9 schematically shows a cross sectional side view of an exemplary embodiment of a battery module 50. The battery module 50 may widely correspond to one of the above the battery modules 50. Therefore, only those features of the battery module 50 are explained in the following in which the battery module 50 of figure 9 differs from the above battery modules 50.

The battery module 50 may comprise at least two of the above battery cells 20, each having the cell body 21 and the at least two electrical contacts 30, 32 and being arranged within the module housing 52. The battery module 50 may comprise a first guide unit 56 being arranged within the module housing 52, being coupled to the battery cells 20 and being configured for guiding at least one wear indicator from the battery cells 20 to the wear sensor 42 and if any of the sensor array 40 of the battery module 50. The first guide unit may be referred to as first sensing guide channel. The first guide unit 50 may be applied to direct signal sources, i.e. wear indicators, to a sensing area provided by the sensor area 40, in particular the wear sensors 42, within the battery module 50. The wear indicator may be one or more of a group of wear indicators, the group comprising HF, electrolyte, ethylene carbonate, diethyl carbonate, H₂O, H₂, CO, C₂H₄, LiPF₆ salt, and CO₂ content.

The sensor array 40, in particular the wear sensor 42, may be arranged within the battery module 50 such that it is visible from outside of the battery module 50. In particular, the module housing 52 may comprise the transparent module window 52 which is arranged such that the sensor array 40, in particular the wear sensor 42, may be visible from outside of the battery module 50 through the module window 54.

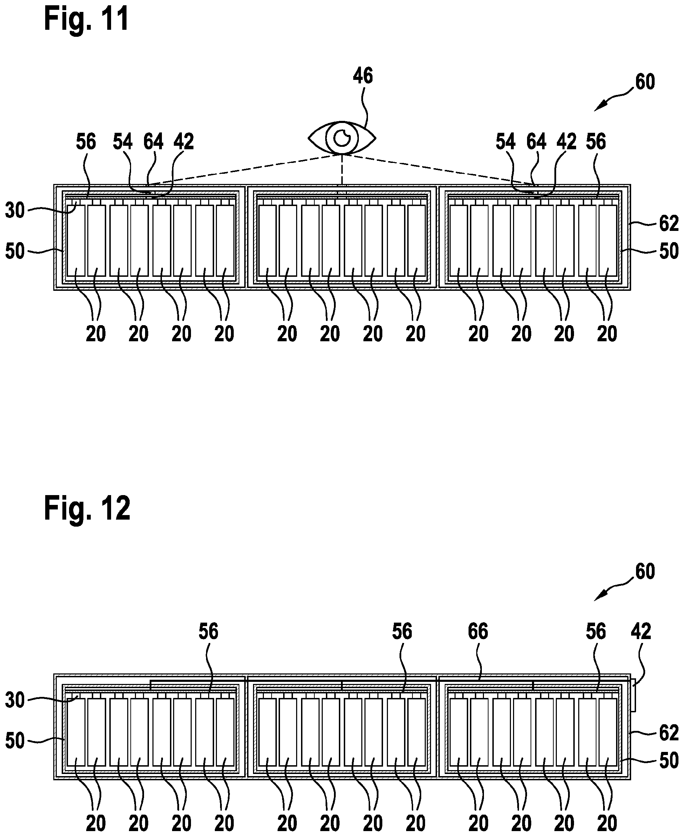

Fig. 10 schematically shows a cross sectional side view of an exemplary embodiment of a battery module 50. The battery module 50 may widely correspond to one of the above the battery modules 50. Therefore, only those features of the battery module 50 are explained in the following in which the battery module 50 of figure 12 differs from the above battery modules 50.

The sensor array 40 and/or the wear sensors 42 may be arranged at an outer surface of the module housing 52 of the battery module 50. The first guide unit 56 may be guided through the module housing 52 to the sensor array 40 and/or wear sensors 42. For example, the module housing 52 may comprise a recess through which the first guide unit 56 may extend.

Fig. 11 schematically shows a cross sectional side view of an exemplary embodiment of a battery pack 60. The battery pack 60 may widely correspond to the above battery pack 60. Therefore, only those features of the battery pack 60 are explained in the following in which the battery pack 60 of figure 11 differs from the above battery pack 60.

For example, the battery pack 60 may comprise two or more of the battery modules 50 explained with respect to figure 9. Alternatively, the battery pack 60 may comprise two or more of the battery modules 50 explained with respect to figure 10. The pack windows 64 and the battery modules 50 may be arranged such that the sensor arrays 40, in particular the wear sensors 42, may be visible from outside of the battery pack 60 through the corresponding pack windows 64 and corresponding module windows 54. For example, the pack window 64 are arranged such that they overlap, e.g. completely, the corresponding module windows 54.

Fig. 12 schematically shows a cross sectional side view of an exemplary embodiment of a battery pack 60. The battery pack 60 may widely correspond to one of the above battery packs 60. Therefore, only those features of the battery pack 60 are explained in the following in which the battery pack 60 of figure 12 differs from the above battery packs 60.

The battery pack 60 may comprise the battery modules 50 each comprising one of the above first guide units 56. The first guide units 56 may be coupled to the corresponding battery cells 20 and may be configured for guiding at least one of the above wear indicators from the battery cells 20 to a second guide unit 66 of the battery pack 60. The second guide unit may be referred to as second sensing guide channel. The second guide unit 66 may be arranged within the battery pack 60 outside of the battery modules 50. The second guide unit 66 may be coupled to the first guide unit 56 and may be configured for guiding the at least one wear indicator from the first guide unit 56 to the sensor array 40 and/or the corresponding wear sensor 42. For example, the sensor array 40 and/or, respectively, the wear sensor 42, may be arranged at an outer surface of the battery pack 60. For example, the pack housing 62 may comprise recess through which the second guide unit 66 extends to the sensor array 40 and/or, respectively, the wear sensor 42.

Alternatively, the battery pack 60 may comprise one of the above transparent pack windows 64, wherein the sensor array 40 and/or, respectively, the wear sensor 42 may be arranged within the battery pack 60 behind the pack window 64 such that the sensor array 40 and/or, respectively, the wear sensor 42 may be visible from outside of the battery pack 60 through the pack window 64.

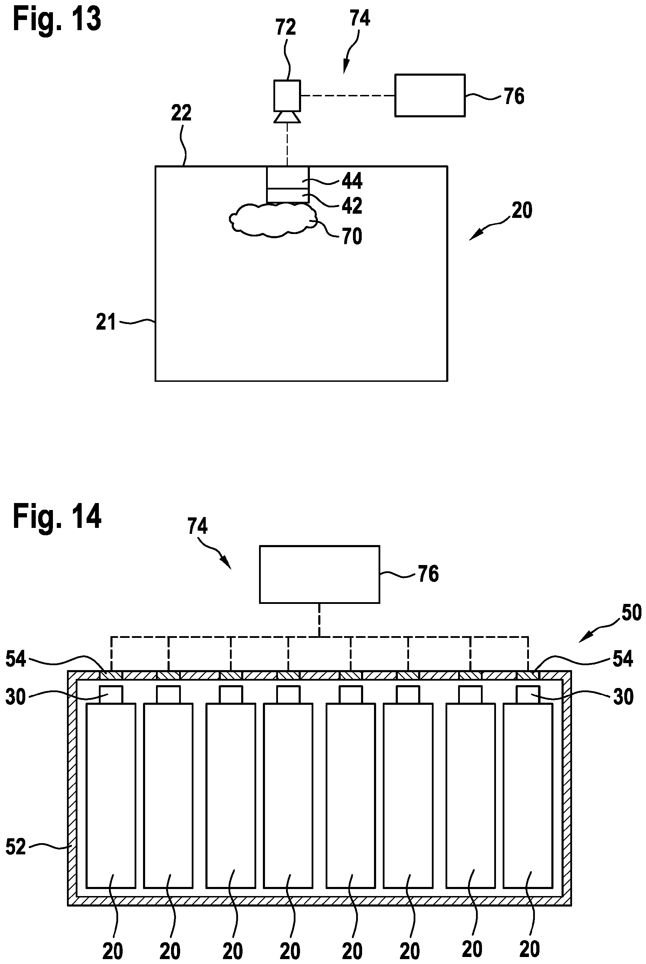

Fig. 13 schematically illustrates a working principle of an exemplary embodiment of a battery management system 74. The battery management system 74 may be arranged for checking, in particular automatically, the wear state of one or more of the above battery cells 20. The battery cells 20 may stand alone or may be arranged in one of the above battery modules 50, wherein the battery modules 50 optionally may be arranged within one of the above battery packs 60.

The battery management system 74 may comprise an optical sensor 72 and a controller 76. The optical sensor 72 may be a camera, e.g. a digital camera, e.g. a CCD-camera. The optical sensor 72 may be configured for detecting the visual appearance of the sensor array 40 and/or the wear sensor(s) 42 of the battery cell 20, the battery module 50 and/or, respectively, the battery pack 60, e.g. through the cell window 44, the module window 54 or, respectively, the pack window 64. The optical sensor 72 may be configured for generating a signal representing the visual appearance of the wear sensor(s) 42. In particular, the optical sensor 72 may be arranged such that the sensor array 40 and/or the wear sensor(s) 42 are arranged within a field of view of the optical sensor 72.

The controller 76 may be or may comprise a chip and/or an integrated circuit. The controller 76 may be coupled to the optical sensor 72 for receiving a signal of the optical sensor 72. The controller 76 may be configured for determining a value of the wear parameter depending on the signal of the optical sensor 72 representing the visual appearance of the wear sensor(s) 42.

The sensor array 40 and/or the wear sensors 42 may be arranged such that they come in direct physical contact with the wear indicator 70.

Fig. 14 schematically illustrates a working principle of an exemplary embodiment of a battery management system 74. The battery management system 74 may widely correspond to the above battery management system 74. Therefore, only those features of the battery management system 74 are explained in the following in which the battery management system 74 of figure 14 differs from the above battery management system 74.

The battery management system 74 may be arranged for checking, in particular automatically, the wear state of the battery module 50 explained with respect to figure 5. However, the battery management system 74 may be arranged for checking the wear state of any of the battery cells 20, battery modules 50, and/or battery packs 60, as explained above. The battery management system 74 may comprise one single optical sensor 72 (not shown in figure 14), as explained with respect to figure 13, and at least one light guiding structure, e.g. an optical fibre, guiding the light from the module windows 54 to the controller 76. Alternatively, the battery management system 74 may comprise more than one optical sensor 72 (not shown in figure 14), as explained with respect to figure 13, e.g. one for each of the module windows 54.

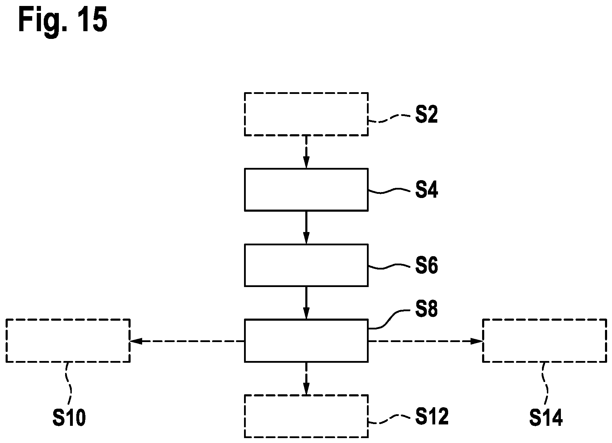

Fig. 15 schematically shows a flow diagram of an exemplary embodiment of a method for determining a value of at least one wear parameter of one or more of the above battery cells 20, battery modules 50 and/or battery packs 60. The method may be embodied as a computer program. The computer program may be carried out by a processor of the controller 76 of the battery management system 74. The computer program may be stored in a memory of the controller 76 of the battery management system 74.

In an optional step S2, it may be determined whether the battery cell 20, battery module 50, and/or battery pack 60 are in rest time or in normal operation. Alternatively or additionally, it may be determined whether a service life of the battery cell 20, the battery module 50, and/or the battery pack 60 has ended.

In step S4, a signal representing the visual appearance of the sensor array 40, in particular of one or more wear sensors 42, coupled to the battery cell 20, the battery module 50 and/or the battery pack 60 may be received. The signal may be generated by the optical sensor 72 and may be sent to the controller 76 receiving the signal.

In step S6 a value of the wear parameter may be determined depending on the visual appearance of the wear sensor 42. For example, the data encoded within the signal may be processed by an image analysing program running on the controller 76. The image analysing program may be a conventional image analysing program configured for analysing the visual appearance of the sensor array 40 and/or the wear sensors 42 depending on the data encoded within the signal. Alternatively, a neural network may be used to determine the value of the real parameter depending on the data. The neural network may be trained by a training data set in advance to determine the value of the real parameter depending on the data. For example, the training may be a supervised training. The training data set may comprise data representing the visual appearance of a huge amount of sensor arrays 40 and/or the wear sensors 42 in different wear states, wherein the features for the training may be extracted from the data and wherein the values of the wear parameters may be the labels for the training.

In a step S8, it may be determined whether the battery cell 20, the battery module 50 and/or the battery pack 60 under investigation may be used further, may have to be repaired, or may have to be replaced depending on the determined value of the wear parameters. For example, a table assigning the different actions to different values of the wear parameters may be stored in the memory of the controller 74 for this reason. If it is determined that the battery cell 20, the battery module 50 and/or the battery pack 60 under investigation may be used further, the method may be terminated.

A step S10 may be carried out, if the battery cell 20, the battery module 50 and/or the battery pack 60 under investigation may be used further but may have to be repaired. In step S12, a signal may be generated, the signal indicating that the battery cell 20, the battery module 50 and/or the battery pack 60 under investigation may be used further but may have to be repaired.

A step S12, may be carried out, if the battery cell 20, the battery module 50 and/or the battery pack 60 under investigation may have to be replaced. In step S12, a signal may be generated, the signal indicating that the battery cell 20, the battery module 50 and/or the battery pack 60 under investigation may be used further but may have to be replaced.

A step S14, may be carried out, if the battery cell 20, the battery module 50 and/or the battery pack 60 under investigation may have to be recycled. In step S14, a signal may be generated, the signal indicating that the battery module 50 and/or the battery pack 60 under investigation may have to be recycled.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. For example, all of the above battery cells 20, configured as stand-alone battery cell, within one of the battery modules 50 and/or within one of the battery packs 60 may be equipped with one single wear sensor 42 or with the sensor array 40 comprising at least two of the wear sensors 42.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 20: battery cell
- 21: cell body
- 22: top side
- 24: bottom side
- 26: lateral side
- 28: vent
- 30: first electrical contact
- 32: second electrical contact
- 40: sensor array
- 42: wear sensor
- 44: cell window
- 46: eye
- 50: battery module
- 52: module housing
- 54: module window
- 56: first guide unit
- 60: battery pack
- 62: pack housing
- 64: pack window
- 66: second guide unit
- 70: wear indicator
- 72: optical sensor
- 74: BMS
- 76: controller

## Claims

1. A battery cell (20), comprising:
a cell body (21);
at least two electrical contacts (30, 32); and
at least one wear sensor (42) being arranged within and/or at the cell body (21) such that it is visible from outside of the cell body (21) and being configured for determining at least one wear parameter and for changing its visual appearance depending on the measured wear parameter.

2. The battery cell (20) in accordance with claim 1, comprising:
a transparent cell window (44) within the cell body (21), wherein the wear sensor (42) is arranged within the cell body (21) behind the cell window (44) such that the wear sensor (42) is visible from outside of the cell body (21) through the cell window (44).

3. The battery cell (20) in accordance with claim 1, wherein
the at least one wear parameter is one of a group of wear parameters, the group comprising HF content, pH-value, ethylene carbonate content, diethyl carbonate content, current within the battery cell, H₂O content, H₂ content, cell deformation, CO content, C₂H₄ content, and CO₂ content.

4. The battery cell (20) in accordance with one of the preceding claims, wherein
the wear sensor (42) comprises at least one of the group of a tape, a coating, a painting, an integrated chip.

5. The battery cell (20) in accordance with one of the preceding claims, wherein
the wear sensor (42) is configured for changing its visual appearance depending on the measured wear parameter by changing at least one of the group of its colour, its shape, its transparency, the amount of its material.

6. The battery cell (20) in accordance with one of the preceding claims, comprising
a sensor array (40) comprising the wear sensor (42) and at least one further wear sensor (42) being arranged within and/or at the cell body (21) such that it is visible from outside of the cell body (21) and being configured for determining at least one further wear parameter and for changing its visual appearance depending on the measured further wear parameter.

7. A battery module (50), comprising:
at least two battery cells (20) in accordance with one of the preceding claims; and
a module housing (52) in which the battery cells (20) are arranged and which comprises a transparent module window (54) which is arranged such that the wear sensor (42) is visible from outside of the battery module (50) through the module window (54).

8. A Battery module (50), comprising:
at least two battery cells (20) having a cell body (21) and at least two electrical contacts (30, 32);
a first guide unit (56) coupled to the battery cells (20) and being configured for guiding at least one wear indicator (70) from the battery cells (20) to a wear sensor (42); and
the wear sensor (42) being arranged within and/or at the battery module (50) such that it is visible from outside of the battery module (50) and being configured for determining at least one wear parameter from the wear indicator (70) and for changing its visual appearance depending on the determined wear parameter.

9. The battery module (50) in accordance with claim 8, comprising:
a module housing (52) in which the battery cells (20), the first guide unit (56) and the wear sensor (42) are arranged, the module housing (52) comprising a transparent module window (54) which is arranged such that the wear sensor (42) is visible from outside of the battery module (50) through the module window (54).

10. The battery module (50) in accordance with claim 8, comprising:
a module housing (52) in which the battery cells (20) and the first guide unit (56) are arranged, wherein the wear sensor (42) is arranged at an outer surface of the module housing (52) and wherein the first guide unit (56) is guided through the module housing (52) to the wear sensor (42).

11. A battery pack (60), comprising:
at least two battery modules (50) in accordance with one of claims 7 to 10;
a pack housing (62) in which the battery modules (50) are arranged and which comprises a transparent pack window (64) which is arranged such that the wear sensor (42) is visible from outside of the battery pack (60) through the pack window (64).

12. A battery pack (60), comprising:
at least two battery modules (50) each comprising at least two battery cells (20) having a cell body (21) and at least two electrical contacts (30, 32) and a first guide unit (56) being arranged within the corresponding battery module (50), the first guide unit (56) being coupled to the corresponding battery cells (20) and being configured for guiding at least one wear indicator (70) from the battery cells (20) to a second guide unit (66);
the second guide unit (66) being arranged within the battery pack (60) outside of the battery modules (50), being coupled to the first guide unit (56) and being configured for guiding the at least one wear indicator (70) from the first guide unit (56) to a wear sensor (42); and
the wear sensor (42) being arranged within and/or at the battery pack (60) such that it is visible from outside of the battery pack (60) and being configured for determining at least one wear parameter from the wear indicator (70) and for changing its visual appearance depending on the measured wear parameter.

13. The battery pack (60) in accordance with claim 12, comprising:
a transparent pack window (64) within the battery pack (60), wherein the wear sensor (42) is arranged within the battery pack (60) behind the pack window (64) such that the wear sensor (42) is visible from outside of the battery pack (60) through the pack window (64).

14. Battery management system (BMS) for checking a wear state of one or more battery cells (20), comprising:
at least one optical sensor (72) being configured for detecting the visual appearance of the wear sensor (42) of the battery cell (20), the battery module (50) and/or the battery pack (60) in accordance with one of the preceding claims and for generating a signal representing the visual appearance of the wear sensor (42), and
a controller coupled to the optical sensor (72) and being configured to receive the signal from the optical sensor (72) and for determining a value of the wear parameter depending on the visual appearance of the wear sensor (42).

15. Method for determining a value of at least one wear parameter of a battery cell (20), a battery module (50) and/or a battery pack (60) in accordance with one of claims 1 to 13, the method comprising:
receiving a signal representing the visual appearance of the wear sensor (42) of the battery cell (20), the battery module (50) and/or the battery pack (60); and
determining a value of the wear parameter depending on the visual appearance of the wear sensor (42).
